# EUROPEAN PATENT SPECIFICATION

(11) **EP 3 529 472 B1**
(45) Date of publication and mention of the grant of the patent: **19.01.2022**
(21) Application number: 17863206.3
(22) Date of filing: 22.09.2017
(51) Int. Cl.: G05D 23/02, G05D 23/13, F01P 7/16, F16K 31/68

(54) **A THERMOSTAT DEVICE FOR A COOLING SYSTEM AND A COOLING SYSTEM COMPRISING SAID THERMOSTAT DEVICE.**
THERMOSTATVORRICHTUNG FÜR EIN KÜHLSYSTEM UND KÜHLSYSTEM MIT BESAGTER THERMOSTATVORRICHTUNG
DISPOSITIF THERMOSTATIQUE POUR UN SYSTÈME DE REFROIDISSEMENT ET SYSTÈME DE REFROIDISSEMENT COMPRENANT CE DISPOSITIF THERMOSTATIQUE

(30) Priority: 21.10.2016 SE 1651382
(43) Date of publication of application: 28.08.2019
(73) Proprietor: Scania CV AB, 151 87 Södertälje (SE)
(72) Inventor: KARDOS, Zoltan, 151 35 Södertälje (SE); HALL, Ola, 117 67 Stockholm (SE)
(74) Representative: Scania CV AB
(86) International application number: PCT/SE2017/050919
(87) International publication number: WO 2018/074960

(56) References cited:
- EP-A1- 2 932 061
- EP-A2- 2 037 097
- WO-A1-2012/083448
- WO-A1-2014/098709
- DE-A1- 3 315 308
- DE-A1- 3 705 232
- GB-A- 2 476 073
- JP-A- H06 193 443
- JP-A- H08 210 553
- US-A- 4 606 302
- US-A- 5 960 872
- US-A1- 2016 109 890

## Description

### BACKGROUND OF THE INVENTION AND PRIOR ART

The present invention relates to a thermostat device for a cooling system according to claim 1.

Heavy vehicles are often equipped with a supplementary brake in the form of a hydraulic retarder. In a conventional hydraulic retarder, an oil is used as working medium. When the retarder is activated, the oil is rapidly heated in the retarder. The oil leaving the retarder is cooled in a retarder cooler by coolant circulating in the cooling system of the vehicle. In another kind of hydraulic retarder, the coolant is used as working medium. In this case, the temperature of the coolant in the cooling system rises even more rapidly when the retarder is activated.

A conventional cooling system comprises a thermostat sensing the temperature of the coolant in a position upstream of a radiator. The thermostat directs the coolant to the combustion engine without cooling in the radiator when the coolant has a lower temperature than a regulating temperature of the thermostat, and to the radiator for cooling when the coolant has a higher temperature than the regulating temperature. The radiator is a component of the cooling system in which the temperature of the coolant can change rapidly. In a conventional cooling system it takes a certain period of time before the cooled coolant from the radiator reaches the thermostat. The ability of the cooling system to react rapidly to temperature changes of the coolant in the radiator is, therefore, low. The slow feedback may lead to what is known as "temperature cycling", in which the thermostat switches between an open and a closed position during a relatively long period of time. As a consequence, the radiator may be frequently exposed to large changes in temperature, leading to a shorter lifetime.

SE 532 354 shows a cooling system with a thermostat sensing the temperature of the coolant in a pilot circuit. The pilot circuit receives a small part of the coolant flow from an inlet line to the combustion engine. In this case, the thermostat senses the temperature of the coolant just after it has been cooled in the radiator. Thus, a considerably faster feedback is obtained when the coolant undergoes rapid changes in temperature in the cooler. The problem of temperature cycling can be essentially avoided with the aid of such a pilot circuit.

US 2016/109890 A1 describes a thermostat comprising at least one wax motor that mediates coolant flow between two inlet passages and three outlet passages as a function of longitudinal position, the longitudinal position varying in response to changes in coolant temperature.

GB 2476073 A describes a thermostatic valve assembly for an engine cooling system having an inlet port, an outlet port and a moveable sealing element for opening or closing a pathway of coolant circulating in the engine. The thermostatic valve comprises a first and a second thermal expansion element where the first thermal expansion element stretches to an extended configuration in response to the coolant having a first temperature and the second thermal expansion element stretches to an extended configuration in response to the coolant having a second temperature that is above the first temperature.

EP2932061 A1 describes a cooling system comprising two thermostatic devices.

### SUMMARY OF THE INVENTION

The object of the present invention is to provide a thermostat device which is compact and includes few components at the same time as it has capacity to distribute the coolant flow to a radiator and a radiator bypass line in view of the temperature of the coolant in two positions of the cooling system.

This object is achieved with the thermostatic device defined in claim 1. The temperature rise of the coolant when it flows through a combustion engine is relatively constant and usually less than 10°C. During operating conditions in which a thermostat opens, the coolant that is led into the radiator undergoes a rapid and abrupt cooling. A further object in a cooling system such as hydraulic retarders may rapidly and abrupt heat the coolant when it is activated. The thermostat device receives coolant from an upstream position of the radiator which is to be distributed to a radiator bypass line or a radiator. Furthermore, a pilot circuit circulates a small coolant from a downstream position of the radiator through the thermostat device. The thermostat device comprises a movably arranged valve body configured to distribute the received coolant to the radiator bypass line and the radiator in dependence on its position. The thermostat device comprises a first thermal expansion element sensing the temperature of the coolant in the pilot circuit and providing a first stroke of the valve body in response to the temperature of the coolant in the pilot circuit. The thermostatic device comprises a second thermal expansion element sensing the temperature of the received coolant and providing a second stroke of the valve body in response to said temperature. In this case, the distribution of coolant to the radiator and the radiator bypass line is determined by a common valve body which is controlled by the temperature of the coolant in two different positions of the cooling system. Temperature changes in the coolant can be rapidly indicated and followed by a correspondingly rapid regulation of the position of the valve body. Furthermore, the use of two thermal expansion elements and a common valve body results in a compact design including few components.

According to an embodiment of the invention, each thermal expansion element comprises each a sensor member configured to sense the temperature of the coolant and a stroke member configured to provide said stroke of the valve body. Such thermal expansion elements are able to provide a stroke of the valve body in dependence on the temperatures of the coolant. The sensor member of one of the thermal expansion elements may be stationary arranged in the thermostat device and the stroke member of said stationary expansion element may be connected to a part of the other thermal expansion element. Such a stationary thermal expansion element is able to provide a stroke of the movably arranged thermal expansion element together with the valve body.

According to an embodiment of the invention, the stroke member of the stationary arranged thermal expansion element is connected to the stroke member of the movably arranged thermal expansion element and the sensor member of the movably arranged thermal expansion element is connected to the valve body. Since the stroke members of the thermal expansion element are connected to each other, the can be activated in opposite directions. The sum of the strokes defines the position of the valve body. Alternatively, it is possible to use a common stroke member for the two thermal expansion elements. Such a design reduces further the number of components used in the thermostat device.

According to an embodiment of the invention, the stroke member of the stationary arranged thermal expansion element is connected to the sensor member of the movably arranged thermal expansion element and the stroke member of the movably arranged thermal expansion element is connected to the valve body. In this case, the stroke members of the thermal expansion elements can be activated in the same direction. Also in this case, the sum of the strokes defines the position of the valve body. According to an embodiment of the invention, each of the thermal expansion elements comprises a sensor member in the form of a capsule enclosing a material body changing phase at a specific temperature and a stroke member in the form of a piston configured to provide said stroke of the valve body when said material body changes phase. The individual thermal expansion elements may have a conventional design. Such thermal expansion elements are inexpensive and they have a reliable function. The material bodies may be wax material having suitable phase changing temperatures.

According to an embodiment of the invention, the thermostat device comprises a thermostat housing enclosing the thermal expansion elements and the valve body. Such a thermostat device may have a compact design and it requires substantially no more space than a conventional thermostat.

According to an embodiment of the invention, the valve body is movably arranged between a first end position in which it directs the entire coolant flow to the radiator bypass line, a second end position in which it directs the entire coolant flow to the radiator and at least one intermediate position in which it directs a part of the coolant flow to the radiator bypass line and a remaining part of the coolant flow to the radiator. During operation conditions when one of the thermal expansion elements provides a stroke, the valve body may be moved to the intermediate position. During operation conditions when both thermal expansion elements provides a stroke, the valve body may be moved to the second end position. The strokes of the thermal expansion elements may be of the same length or of different length. The thermostat device may comprises a valve spring configured to move the valve body towards the first end position.

According to an embodiment of the invention, the thermostat device comprises a movable valve unit including two valve bodies in the form of a first valve plate configured to regulate the coolant flow to the radiator and a second valve plate configured to regulate the coolant flow to the radiator bypass line. In the first end position of the valve unit, the first valve plate may close the outlet to the radiator at the same time as the second valve plate exposes the outlet to the radiator bypass line. In the second end position of the valve unit, the first valve plate may expose the outlet to the radiator at the same time as the second valve plate closes the outlet to the radiator bypass line.

According to an embodiment of the invention, the thermostat device comprises a movable valve body in the form of a tubular sleeve having a periphery wall configured to expose or cover the two outlets in view of its position. In this case, the outlets may be arranged in a side wall of the thermostat housing at different high levels.

The further object to be cooled by the coolant in the cooling system may be a temporarily activated object such as a hydraulic retarder or a retarder cooler for a hydraulic retarder. Such a component may rapidly increase the temperature of the coolant in the cooling system when it is activated.

### BRIEF DESCRIPTION OF THE DRAWINGS

In the following preferred embodiments of the invention is described, as examples, with reference to the attached drawings, in which:
- Fig. 1: shows a cooling system comprising a thermostat device according to the invention,
- Fig. 2: shows a thermostat device system according to a first embodiment of the invention,
- Fig. 3: shows a thermostat device system according to a second embodiment of the invention and
- Fig. 4: shows a thermostat device system according to a third embodiment of the invention.

### DETAILED DESCRIPTION OF PREFERRED EMBODIMENTS OF THE INVENTION

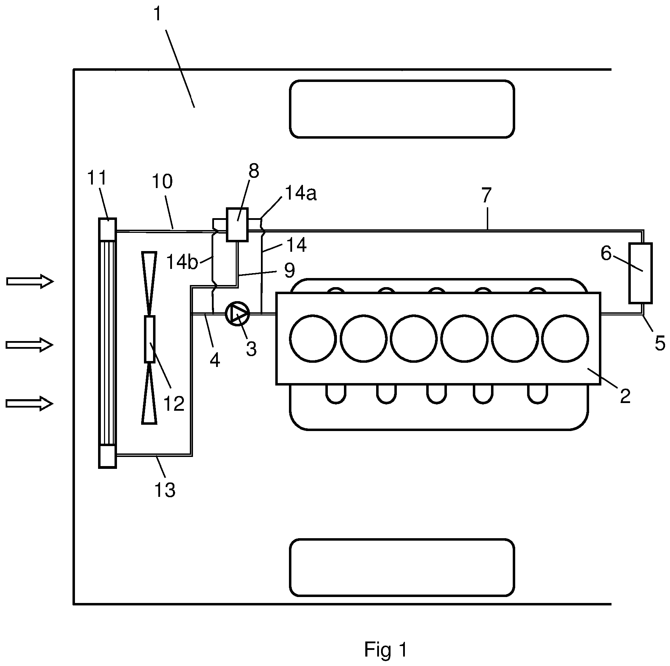

Fig. 1 shows a cooling system cooling a combustion engine 2 in a schematically indicated vehicle 1. The coolant is circulated in the cooling system by means of a coolant pump 3 that is arranged in an engine inlet line 4 directing coolant to the combustion engine 1. After the coolant has passed through the combustion engine 1 it is directed, through an engine outlet line 5, to a further object that can be activated intermittently in the form of a hydraulic retarder 6. Thus the cooling system is used for the cooling of a further object, in addition to the combustion engine 1. The retarder 6 is in this case a hydraulic retarder using coolant as working medium. Alternatively, a working medium in the form of an oil is used in the hydraulic retarder. In such a case, the coolant cools the working medium in a retarder cooler. The coolant is directed from the retarder 6, via a retarder outlet line 7, to a thermostat device 8. Depending on the temperature of the coolant, the thermostat device 8 directs the coolant to a radiator bypass line 9 and/or, via a radiator inlet line 10, to a radiator 11. The radiator bypass line 9 directs the coolant back to the engine inlet line 4 and the coolant pump 3. The radiator 11 is arranged at a front portion of the vehicle 1. Other coolers such as a charge air cooler may be arranged in front of the radiator 11. A cooling fan 12 forces a cooling air stream through the radiator 11 such that the coolant undergoes an effective cooling. After that the coolant has been cooled in the radiator 11, it is directed, via a return line 13, back to the engine inlet line 4 and the coolant pump 3. A pilot circuit 14 circulates coolant through the thermostat device. The pilot circuit 14 comprises a first pilot circuit part 14a directing coolant from a position downstream of the coolant pump 3 in the engine inlet line 4 to the thermostat device 8 and a second pilot circuit part 14b directing coolant from the thermostat device 8 to a position upstream of the coolant pump 3 in the engine inlet line 4.

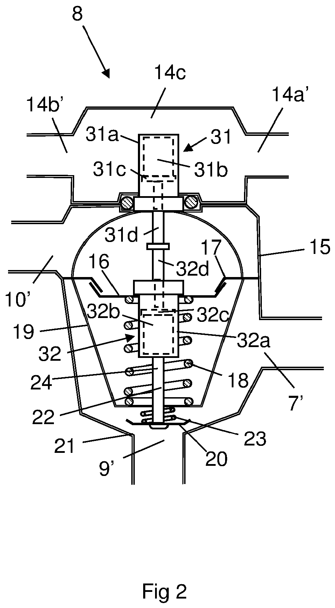

Fig 2 shows the thermostat device 8 in Fig. 1 more in detail. The thermostat device 8 comprises a thermostat housing 15. The thermostat housing 15 comprises a inlet 7'receiving coolant from the retarder outlet line 7, a first outlet 9' directing coolant to the radiator bypass line 9 and a second outlet 10' directing coolant, via the radiator inlet line 10, to the radiator 11. The thermostat housing 15 comprises further a pilot inlet 14a' receiving coolant from the first pilot circuit part 14a, a chamber 14c and a pilot outlet 14b' directing coolant back to the engine inlet line 4 via the second pilot circuit part 14b. Furthermore, the thermostat device 8 comprises a first valve body in the form of a first valve plate 16 which is movably arranged in relation to a first valve seat 17 between a closed position and an open position. A first valve spring 18 is arranged between the first valve plate 16 and a stationary valve portion 19 in a manner such that the first valve plate 16 is moved against the first valve seat 17 by the valve spring 18.

The thermostat device 8 comprises a second valve body in the form of a second valve plate 20 which is movably arranged in relation to a second valve seat 21 between a closed position and an open position. The second valve seat 21 is defined by the first outlet 9'. The second valve plate 20 is attached to an end of a rod element 22. A second valve spring 23 is arranged between the stationary valve portion 19 and the second valve plate 20. The first valve body 17, the second valve plate 20 and the elongated element 22 are included in a movably arranged valve unit 24 including the first valve plate 16 and the second valve plate 20. The first valve spring 18 tends to move the movable valve unit 24 to a first end position in which the first valve plate 16 closes the opening in the valve seat 17 and thus preventing a coolant flow via the second outlet 10' to the radiator 11. At the same time, the second valve plate 20 exposes the opening in the second valve seat 21 and thus allowing a coolant flow via the first outlet 9' to the radiator bypass line 9.

The thermostat device 8 comprises a first thermal expansion element 31. The first thermostat expansion element 31 comprises a first sensor member in the form of a first capsule 31a fixedly arranged in the chamber 14c in thermal contact with the coolant flowing through the pilot circuit 14. The first capsule 31a comprises a closed compartment that is occupied by a first material body 31b. A flexible membrane 31c is arranged between the first material body 31b and an end of a first stroke member in the form of a first piston 31d. The first material body 31b has the property that it increases in volume when it melts and passes into liquid phase. The first material body 31b changes phase at a first temperature T₁. The thermostat device 8 comprises a second thermal expansion element 32. The second thermostat expansion element 32 comprises a second sensor member in the form of a second capsule 32a fixedly arranged on the first valve plate 16. Thus, the second thermostat expansion element 32 is a part of the movable valve unit 24. The second capsule 32a comprises a closed compartment that is occupied by a second material body 32b. A flexible membrane 32c is arranged between the second material body 32b and an end of a second stroke member in the form of a second piston 32d. The second material body 32b has the property that it increases in volume when it melts and passes into liquid phase. The second material body 32b changes phase at a second temperature T₂. The second capsule 32a is arranged in an inner space of the thermostat housing 8 in thermal contact with the coolant received from the retarder outlet line 7. In this case, the free ends of the pistons 31d, 32d of the first thermostat expansion element 31 and the second thermostat expansion element 32 are fixedly connected to each other.

During operation of the combustion engine 2, the coolant is circulated through the cooling circuit by means of the coolant pump 3. The first capsule 31a is in thermal contact with coolant flowing through the pilot circuit 14 and the second capsule 32a is in thermal contact with the coolant entering the valve device 8 via the inlet 7'. As a result, the thermostat device 8 is controlled by the temperature of the coolant in two positions of the cooling system namely in a position downstream of the radiator 11 and in a position downstream of the retarder 6. During operating conditions when the coolant in the pilot circuit 14 has a lower temperature than the first phase changing temperature T₁ and the coolant in the retarder outlet line 7 has a lower temperature than the second phase changing temperature T₂, the first material body 31b as well as the second material body 32b are in solid phase. Thus, none of the material bodies 31b, 32b are in an expanded state. Consequently, the movable valve unit 24 is maintained is in the first end position, which is shown in Fig. 2. In the first end position, the first valve plate 16 is in a closed position in relation to the first valve seat 17 and the second valve plate 20 is in a fully open position in relation to the second valve seat 21. When the valve unit 24 is in this first end position there is no cooling demand of the coolant, the entire coolant flow entering the thermostat device 8 from the retarder outlet line 7 is directed to the radiator bypass line 9.

During operating conditions when the coolant in the pilot circuit 14 has a higher temperature than the first phase changing temperature T₁ and the coolant in the retarder outlet line 7 has a lower temperature than the second phase changing temperature T₂, the first material body 31b is in liquid phase and the second material body 32b is in solid phase. Thus, the first material body 31b is in an expanded state. During expansion of the first material body 31b, it provides a stroke, via the flexible membrane 31c and the piston31d, to the valve unit 24. The valve unit 24 is moved downwardly from the first end position to an intermediate position, in which the first valve plate 16 is in a partly open position in relation to the first valve seat 17 and the second valve plate 20 is in a partly open position in relation to the second valve seat 21. When the valve unit 24 is in this intermediate position, a part of the coolant flow entering the thermostat device 8 is directed to the radiator bypass line 9 and a remaining part of the coolant flow is directed to the radiator 11.

During operating conditions when the coolant in the pilot circuit 14 has a lower temperature than the first phase changing temperature T₁ and the coolant in the retarder outlet line 7 has a higher temperature than the second phase changing temperature T₂, the first material body 31b is in solid phase and the second material body 32b is in liquid phase. Thus, the second material body 32b is in an expanded state. During expansion of the second material body, it provides a stroke, via the flexible membrane 32c and the piston 32d, to the valve unit 24. The valve unit 24 is moved downwardly from the first end position to an intermediate position, in which the first valve plate 16 is in a partly open position in relation to the first valve seat 17 and the second valve plate 20 is in a partly open position in relation to the second valve seat 21. When the valve unit 24 is in this intermediate position, a part of the coolant flow entering the thermostat device 8 is directed to the radiator bypass line 9 and a remaining part of the coolant flow is directed to the radiator 11.

During operating conditions when the coolant in the pilot circuit 14 has a higher temperature than the first phase changing temperature T₁ and the coolant in the retarder outlet line 7 has a higher temperature than the second phase changing temperature T₂, the first material body 31b as well as the second material body 32b is in liquid phase. Thus, the first material body 31b and second material body 32b are in an expanded state. The first thermal expansion element 31 provides a first stroke of the valve unit 24 from the first end position and the second thermal expansion element 32 provides a second stroke of the valve unit 24. In this case, the valve unit 24 receives a movement from the first end position to a second end positon. In the second end position, the first valve plate 16 is in a fully open position in relation to the first valve seat 17 and the second valve plate 20 is in a closed position in relation to the second valve seat 21. When the valve unit 24 is in this second end position, the entire coolant flow entering the thermostat device 8 is directed to the radiator 11.

In this case, the first thermostat element 31 and the second thermostat element 32 provide strokes via the pistons 31d, 32d in opposite direction in relation to each other. Thus, the distance between the first capsule 31a and the second capsule 32a will increase with the sum of the first stroke and the second stroke. Since the second capsule 32a is a part of the valve unit 24, the valve unit 24 will be moved a corresponding distance from the first end position together with the valve bodies 16, 20. The first thermostat element 31 ensures a fast feedback of the thermostat device 8 when the coolant undergoes rapid temperature changes in the radiator 11. The second thermostat element 32 ensures a fast feedback of the thermostat device 8 when the coolant undergoes rapid temperature changes in the retarder 6. The first material body 31b may have a phase changing temperature of about 89°C and the second material body 32b may have a phase changing temperature of about 96°C. The material bodies may be wax materials having suitable phase changing temperatures.

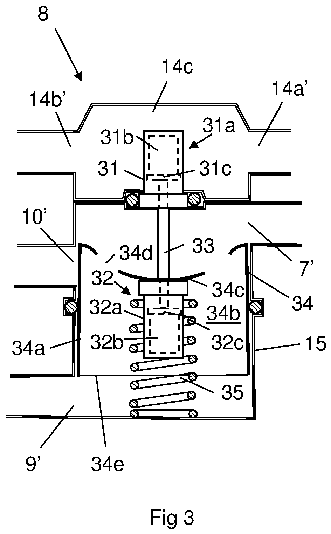

Fig. 3 shows an alternative embodiment of the thermostat device 8. In this case, the first thermal expansion element 31 and the second expansion element 32 comprises a common piston 33. Furthermore, the thermostat device 8 comprises a valve body in the form of a tubular sleeve 34. The tubular sleeve 34 comprises a periphery wall 34a defining an inner space 34b, a support portion 34c, an first opening 34d and a second opening 34e. A valve spring 35 is arranged between the support portion 34c and a stationary portion of the valve housing 15 in a manner such that the valve spring 35 acts with a spring force on the tubular sleeve 34 towards a first end position, which is shown in Fig. 3. The tubular sleeve 34 and the second thermostat element 32 form a movable valve unit 36. The remaining components have a design and function as in the embodiment in Fig. 2.

During operation of the combustion engine 2, the coolant is circulated through the cooling circuit by means of the coolant pump 3. The first capsule 31a is fixedly arranged in thermal contact with coolant flowing through the pilot circuit 14 and the second capsule 32 is arranged in the thermostat housing 15 in thermal contact with the coolant entering the thermostat housing 15 via the inlet 7'. During operating conditions when the coolant in the pilot circuit 14 has a lower temperature than the first phase changing temperature T₁ and the coolant in the retarder outlet line 7 has a lower temperature than the second phase changing temperature T₂, the first material body 31b as well as the second material body 32b are in solid phase. Thus, none of the material bodies 31b, 32b are in an expanded state. The tubular sleeve 34 is maintained in the first end position in which the periphery wall 34a of the tubular sleeve 34 fully exposes the first outlet 9' at the same time as it closes the second outlet 10'. When the tubular sleeve 34 is in this first end position, the entire coolant flow entering the thermostat device 8 from the retarder outlet line 7 is directed to the radiator bypass line 9.

When the coolant in the pilot circuit 14 has a higher temperature than the first phase changing temperature T₁ and the coolant in the retarder outlet line 7 has a lower temperature than the second phase changing temperature T₂, the first material body 31a is in liquid phase and the second material body 32a is in solid phase. Thus, the first material body 31a is in an expanded state. During expansion of the first material body, it provides a first stroke, via the flexible membrane 31c and the shaft 31d, to the tubular sleeve 34. The expansion of the first material body 31c moves the tubular sleeve 34 to a first intermediate position, in which the first outlet 9'and the second outlet 10' are partly exposed by the periphery wall 34a of the tubular sleeve 34. When the tubular sleeve 34 is in this first intermediate position, a part of the coolant flow entering the thermostat device 8 is directed to the radiator bypass line 9 and a remaining part of the coolant flow is directed to the radiator 11.

When the coolant in the pilot circuit 14 has a lower temperature than the first phase changing temperature T₁ and the coolant in the retarder outlet line 7 has a higher temperature than the second phase changing temperature T₂, the first material body 31b is in solid phase and the second material body 32b is in liquid phase. Thus, the second material body 32b is in an expanded state. During expansion of the second material body 32b, it provides a second stroke, via the flexible membrane 32c and the piston 32d, to the tubular sleeve 34. The expansion of the second material body 32b moves the tubular sleeve 34 to a second intermediate position, in which the first valve plate 16 is in a partly open position in relation to the first valve seat 17 and the second valve plate 20 is in a partly open position in relation to the second valve seat 21. When the valve unit 24 is in this second intermediate position, a part of the coolant flow entering the thermostat device 8 is directed to the radiator bypass line 9 and a remaining part of the coolant flow is directed to the radiator 11.

When the coolant in the pilot circuit 14 has a higher temperature than the first phase changing temperature T₁ and the coolant in the retarder outlet line 7 has a higher temperature than the second phase changing temperature T₂, the first material body 31b as well as the second material body 32b are in liquid phase. Thus, the first material body 31b and second material body 32b are in an expanded state. During expansion of the first material body 31b and the second material body 32b, they provide each a stroke, via the pistons 31d, 32d, to the tubular sleeve 34. The expansion of the first material body 31b and the second material body 32b moves the tubular sleeve 34 to a second end position, in which the periphery wall 34a closes the first outlet 9' at the same time as it fully exposes the second outlet 10'. When the tubular sleeve 34 is in this second end position, the entire coolant flow entering the thermostat device 8 is directed to the radiator 11.

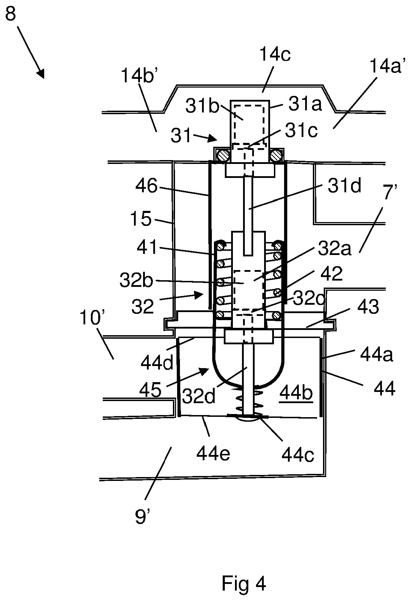

Fig. 4 shows a further alternative embodiment of the thermostat device 8. The thermostat device 8 comprises a first thermostat element 31 provided with a first capsule 31a fixedly arranged in the chamber 14c of the pilot circuit. The first thermostat element 31 comprises a first piston 31d connected to a second capsule 32a of a second thermostat element 32. The second thermostat element 32 comprises a second piston 32d fixedly connected to a spring holder 41. A valve spring 42 is arranged between the spring holder 41 and a stationary portion 43 in the valve housing 15.

The thermostat device 8 comprises a valve body in the form of a tubular sleeve 44. The tubular sleeve 44 comprises a periphery wall 44a defining an inner space 44b, a support portion 44c, an first opening 44d and a second opening 44e. The tubular sleeve 44 is connected to the piston 32d of the second thermal element 32 via the support portion 44c. The second thermal element 32, the spring holder 41, the valve spring 42, and the tubular sleeve 44 is included in a movable valve unit 45. A bracket 46 supports the first thermostat element 31 on the stationary portion 43.

During operation of the combustion engine 2, the coolant is circulated through the cooling circuit by means of the coolant pump 3. The first capsule 31a is fixedly arranged in thermal contact with coolant flowing through the pilot circuit 14 and the second capsule 32 is arranged on the tubular sleeve 44 in thermal contact with the coolant entering the valve housing 15 via the inlet 7'. During operating conditions when the coolant in the pilot circuit 14 has a lower temperature than the first phase changing temperature T₁ and the coolant in the retarder outlet line 7 has a lower temperature than the second phase changing temperature T₂, the first material body 31b as well as the second material body 32b are in solid phase. Thus, none of the material bodies 31b, 32b are in an expanded state. The tubular sleeve 34 is maintained in the first end position in which the periphery wall 44a of the tubular sleeve 44 fully exposes the first outlet 9' at the same time as it closes the second outlet 10'. When the tubular sleeve 44 is in this first end position, the entire coolant flow entering the thermostat device 8 from the retarder outlet line 7 is directed to the radiator bypass line 9.

When the coolant in the pilot circuit 14 has a higher temperature than the first phase changing temperature T₁ and the coolant in the retarder outlet line 7 has a lower temperature than the second phase changing temperature T₂, the first material body 31a is in liquid phase and the second material body 32a is in solid phase. Thus, the first material body 31a is in an expanded state. During expansion of the first material body, it provides a first stroke, via the flexible membrane 31c and the shaft 31d, to the tubular sleeve 44, via the second thermal element 32. The expansion of the first material body 31c moves the tubular sleeve 44 to a first intermediate position, in which the first outlet 9'and the second outlet 10' are partly exposed by the periphery wall 44a of the tubular sleeve 44. When the tubular sleeve 44 is in this first intermediate position, a part of the coolant flow entering the thermostat device 8 is directed to the radiator bypass line 9 and a remaining part of the coolant flow is directed to the radiator 11.

When the coolant in the pilot circuit 14 has a lower temperature than the first phase changing temperature T₁ and the coolant in the retarder outlet line 7 has a higher temperature than the second phase changing temperature T₂, the first material body 31b is in solid phase and the second material body 32b is in liquid phase. Thus, the second material body 32b is in an expanded state. During expansion of the second material body 32b, it provides a second stroke, via the flexible membrane 32c and the piston 32d, to the tubular sleeve 44. The expansion of the second material body 32b moves the tubular sleeve 44 to a second intermediate position, in which the first valve plate 16 is in a partly open position in relation to the first valve seat 17 and the second valve plate 20 is in a partly open position in relation to the second valve seat 21. When the valve unit 24 is in this second intermediate position, a part of the coolant flow entering the thermostat device 8 is directed to the radiator bypass line 9 and a remaining part of the coolant flow is directed to the radiator 11.

When the coolant in the pilot circuit 14 has a higher temperature than the first phase changing temperature T₁ and the coolant in the retarder outlet line 7 has a higher temperature than the second phase changing temperature T₂, the first material body 31b as well as the second material body 32b are in liquid phase. Thus, the first material body 31b and second material body 32b are in an expanded state. During expansion of the first material body 31b and the second material body 32b, they provide each a stroke, via the pistons 31d, 32d, to the tubular sleeve 44. The expansion of the first material body 31b and the second material body 32b moves the tubular sleeve 44 to a second end position, in which the periphery wall 44a closes the first outlet 9' at the same time as it fully exposes the second outlet 10'. When the tubular sleeve 44 is in this second end position, the entire coolant flow entering the thermostat device 8 is directed to the radiator 11.

In this case, the first thermostat element 31 and the second thermostat element 32 provide strokes in the same direction. Thus, the distance between the first capsule 31a and the second capsule 32a may increase with the first stroke and the distance between the second capsule 32a and the tubular sleeve 44 may increase with the second stroke. The above mentioned arrangement of the first thermostat element and the second thermostat, results in a stroke of the tubular sleeve 44 to a position defined by the sum of the strokes provided by the individual thermostat elements 31, 32.

## Claims

1. A thermostat device for a cooling system, wherein the cooling system comprises a coolant configured to circulate in a circuit comprising a combustion engine (1), a further object (6) and a radiator (11), wherein the thermostat device (8) comprises an inlet (7') configured to receive coolant in a position upstream of the radiator (11), a first outlet (9') configured to direct coolant, via a bypass line (9), past the radiator (11), a second outlet (10') configured to direct coolant to the radiator (11), and a movably arranged valve body (16, 20, 34, 44) configured to distribute the coolant from the inlet (7') to said two outlets (9', 10') in dependence on its position and wherein the thermostat device (8) is configured to receive coolant, via a pilot circuit (14), from a position in an engine inlet line (4) downstream of the radiator (11), **characterized in that** the thermostat device (8) comprises a first thermal expansion element (31) configured to be in thermal contact with the coolant entering the thermostat device via the pilot circuit (14) and to provide a first stroke of the valve body (16, 20, 34, 44) in response to the temperature of the coolant in the pilot circuit (14), and a second thermal expansion element (32) configured to be in thermal contact with the coolant received via the inlet (7') and to provide a second stroke of the valve body (16, 20, 34, 44) in response to the temperature of the coolant from the inlet (7') such that the valve body (16, 20, 34, 44) is moved to a position defined by the strokes from the thermal expansion elements (31, 32) .

2. A thermostat device according to claim 1, **characterized in that** each of the thermal expansion elements (31, 32) comprises a sensor member (31a, 32a) configured to sense the temperature of the coolant and a stroke member (31d, 32d, 33) configured to provide said stroke of the valve body (16, 20, 34, 44).

3. A thermostat device according to claim 2, **characterized in that** the sensor member (31a) of one of the thermal expansion elements (31) is stationary arranged in the thermostat device (8) and the stroke member (31d) of said expansion element (31) is connected to the other thermal expansion element (32).

4. A thermostat device according to claim 3, **characterized in that** the stroke member (31d) of the stationary arranged thermal expansion element (31) is connected to the stroke member (32d) of the movably arranged thermal expansion element (32) and the sensor member of the movably arranged thermal expansion element (32) is connected to the valve body (16, 20, 34, 44).

5. A thermostat device according to claim 4, **characterized in that** the thermal expansion elements (31, 32) are provided with a common stroke member (31d, 32d, 33).

6. A thermostat device according to claim 3, **characterized in that** the stroke member (31d) of the stationary arranged thermal expansion element (31) is connected to the sensor member (32a) of the movably arranged thermal expansion element (32) and the stroke member (32d) of the movably arranged thermal expansion element (32) is connected to the valve body (16, 20, 34, 44).

7. A thermostat device according to any one of the preceding claims, **characterized in that** the thermal expansion elements (31, 32) comprise each a sensor member in the form of a capsule (31a, 32a) enclosing a material body (31b, 32b) changing phase at a specific temperature (T₁, T₂) and a stroke member in the form of a piston (31d, 32d, 33) configured to provide said stroke of the valve body (16, 20, 34, 44) when said material body (31b, 32b) changes phase.

8. A thermostat device according to any one of the preceding claims, **characterized in that** the thermostat device comprises a thermostat housing (15) enclosing the thermal expansion elements (31, 32) and the valve body (16, 20, 34, 44).

9. A thermostat device according to any one of the preceding claims, **characterized in that** the valve body (16, 20, 34, 44) is movably arranged between a first end position in which it directs the entire coolant flow to the radiator bypass line (9), a second end position in which it directs the entire coolant flow to the radiator (11) and at least one intermediate position in which it directs a part of the coolant flow to the radiator bypass line (9) and a remaining part of the coolant flow to the radiator (11).

10. A thermostat device according to claim 9, **characterized in that** the thermostat device (8) comprises a valve spring (18, 35, 42) configured to move the valve body (16, 20, 34, 44) towards the first end position.

11. A thermostat device according to any one of the preceding claims, **characterized in that** the thermostat device comprises a movable valve unit (24) including two valve bodies in the form of a first valve plate (16) configured to regulate the coolant flow to the radiator (11) and a second valve plate (20) configured to regulate the coolant flow to the radiator bypass line (9).

12. A thermostat device according to any one of the preceding claims, **characterized in that** the thermostat device comprises a movable valve body in the form of a tubular sleeve (34, 44) having a periphery wall (34a, 44a) configured to expose or cover the two outlets (9', 10') in view of its position.

13. A cooling system comprises a thermostat device according to any one of the preceding claims,

14. A cooling system according to claim 13, **characterized in that** it comprises a further object in the form of a temporarily activated object.

15. A cooling system according to claim 14, **characterized in that** a further object is a hydraulic retarder (6) or a retarder cooler for a hydraulic retarder.

## Patentansprüche

1. Thermostatvorrichtung für ein Kühlsystem, wobei das Kühlsystem ein Kühlmittel umfasst, das so konfiguriert ist, dass es in einem Kreislauf zirkuliert, der einen Verbrennungsmotor (1), ein weiteres Objekt (6) und einen Kühler (11) umfasst, wobei die Thermostatvorrichtung (8) umfasst einen Einlass (7'), der so konfiguriert ist, dass er Kühlmittel in einer Position stromaufwärts des Kühlers (11) aufnimmt, einen ersten Auslass (9'), der so konfiguriert ist, dass er Kühlmittel über eine Bypassleitung (9) an dem Kühler (11) vorbei leitet, einen zweiten Auslass (10'), der so konfiguriert ist, dass er Kühlmittel zu dem Kühler (11) leitet, und einen beweglich angeordneten Ventilkörper (16, 20, 34, 44), der so konfiguriert ist, dass er das Kühlmittel von dem Einlass (7') zu den beiden Auslässen (9', 10') in Abhängigkeit von seiner Position verteilt, und wobei die Thermostatvorrichtung (8) so konfiguriert ist, dass sie Kühlmittel über einen Steuerkreis (14) von einer Position in einer Motoreinlassleitung (4) stromabwärts des Kühlers (11) empfängt, **dadurch gekennzeichnet, dass** die Thermostatvorrichtung (8) ein erstes thermisches Ausdehnungselement (31), das so konfiguriert ist, dass es in thermischem Kontakt mit dem Kühlmittel steht, das über den Steuerkreis (14) in die Thermostatvorrichtung eintritt, und einen ersten Hub des Ventilkörpers (16, 20, 34, 44) in Reaktion auf die Temperatur des Kühlmittels in dem Steuerkreis (14) bereitstellt, und ein zweites thermisches Ausdehnungselement (32) umfasst, das so konfiguriert ist, dass es in thermischem Kontakt mit dem über den Einlass (7') aufgenommenen Kühlmittel steht und einen zweiten Hub des Ventilkörpers (16, 20, 34, 44) in Reaktion auf die Temperatur des Kühlmittels aus dem Einlass (7') bereitstellt, so dass der Ventilkörper (16, 20, 34, 44) in eine durch die Hübe der thermischen Ausdehnungselemente (31, 32) definierte Position bewegt wird.

2. Thermostatvorrichtung nach Anspruch 1, **dadurch gekennzeichnet, dass** jedes der thermischen Ausdehnungselemente (31, 32) ein Sensorelement (31a, 32a), das so konfiguriert ist, dass es die Temperatur des Kühlmittels erfasst, und ein Hubelement (31d, 32d, 33), das so konfiguriert ist, dass es den Hub des Ventilkörpers (16, 20, 34, 44) bereitstellt, umfasst.

3. Thermostatvorrichtung nach Anspruch 2, **dadurch gekennzeichnet, dass** das Sensorelement (31a) eines der thermischen Ausdehnungselemente (31) ortsfest in der Thermostatvorrichtung (8) angeordnet ist und das Hubelement (31d) dieses Ausdehnungselementes (31) mit dem anderen thermischen Ausdehnungselement (32) verbunden ist.

4. Thermostatvorrichtung nach Anspruch 3, **dadurch gekennzeichnet, dass** das Hubelement (31d) des ortsfest angeordneten thermischen Ausdehnungselements (31) mit dem Hubelement (32d) des beweglich angeordneten thermischen Ausdehnungselements (32) verbunden ist und das Sensorelement des beweglich angeordneten thermischen Ausdehnungselements (32) mit dem Ventilkörper (16, 20, 34, 44) verbunden ist.

5. Thermostatvorrichtung nach Anspruch 4, **dadurch gekennzeichnet, dass** die thermischen Ausdehnungselemente (31, 32) mit einem gemeinsamen Hubelement (31d, 32d, 33) versehen sind.

6. Thermostatvorrichtung nach Anspruch 3, **dadurch gekennzeichnet, dass** das Hubelement (31d) des ortsfest angeordneten thermischen Ausdehnungselements (31) mit dem Sensorelement (32a) des beweglich angeordneten thermischen Ausdehnungselements (32) verbunden ist und das Hubelement (32d) des beweglich angeordneten thermischen Ausdehnungselements (32) mit dem Ventilkörper (16, 20, 34, 44) verbunden ist.

7. Thermostatvorrichtung nach einem der vorhergehenden Ansprüche, **dadurch gekennzeichnet, dass** die thermischen Ausdehnungselemente (31, 32) jeweils ein Sensorelement in Form einer Kapsel (31a, 32a), die einen Materialkörper (31b, 32b) umschließt, der bei einer bestimmten Temperatur (T₁, T₂) seine Phase ändert, und ein Hubelement in Form eines Kolbens (31d, 32d, 33), der so konfiguriert ist, dass er den Hub des Ventilkörpers (16, 20, 34, 44) bereitstellt, wenn der Materialkörper (31b, 32b) seine Phase ändert, umfassen.

8. Thermostatvorrichtung nach einem der vorhergehenden Ansprüche, **dadurch gekennzeichnet, dass** die Thermostatvorrichtung ein Thermostatgehäuse (15) umfasst, das die thermischen Ausdehnungselemente (31, 32) und den Ventilkörper (16, 20, 34, 44) umschließt.

9. Thermostatvorrichtung nach einem der vorhergehenden Ansprüche, **dadurch gekennzeichnet, dass** der Ventilkörper (16, 20, 34, 44) zwischen einer ersten Endstellung, in der er den gesamten Kühlmittelstrom zur Kühlerbypassleitung (9) leitet, einer zweiten Endstellung, in der er den gesamten Kühlmittelstrom zum Kühler (11) leitet, und mindestens einer Zwischenstellung, in der er einen Teil des Kühlmittelstroms zur Kühlerbypassleitung (9) und einen restlichen Teil des Kühlmittelstroms zum Kühler (11) leitet, beweglich angeordnet ist.

10. Thermostatvorrichtung nach Anspruch 9, **dadurch gekennzeichnet, dass** die Thermostatvorrichtung (8) eine Ventilfeder (18, 35, 42) umfasst, die so konfiguriert ist, dass sie den Ventilkörper (16, 20, 34, 44) in Richtung der ersten Endstellung bewegt.

11. Thermostatvorrichtung nach einem der vorhergehenden Ansprüche, **dadurch gekennzeichnet, dass** die Thermostatvorrichtung eine bewegliche Ventileinheit (24) mit zwei Ventilkörpern in Form einer ersten Ventilplatte (16), die zum Regulieren des Kühlmittelstroms zum Kühler (11) konfiguriert ist, und einer zweiten Ventilplatte (20), die zum Regulieren des Kühlmittelstroms zur Kühlerbypassleitung (9) konfiguriert ist, umfasst.

12. Thermostatvorrichtung nach einem der vorhergehenden Ansprüche, **dadurch gekennzeichnet, dass** die Thermostatvorrichtung einen beweglichen Ventilkörper in Form einer rohrförmigen Hülse (34, 44) mit einer Umfangswand (34a, 44a) umfasst, die so konfiguriert ist, dass sie die beiden Auslässe (9', 10') im Hinblick auf ihre Position freilegt oder abdeckt.

13. Kühlsystem umfassend eine Thermostatvorrichtung nach einem der vorhergehenden Ansprüche.

14. Kühlsystem nach Anspruch 13, **dadurch gekennzeichnet, dass** es ein weiteres Objekt in Form eines vorübergehend aktivierten Objekts umfasst.

15. Kühlsystem nach Anspruch 14, **dadurch gekennzeichnet, dass** ein weiteres Objekt ein hydraulischer Retarder (6) oder ein Retarderkühler für einen hydraulischen Retarder ist.

## Revendications

1. Dispositif de thermostat pour un système de refroidissement, dans lequel le système de refroidissement comprend un réfrigérant configuré pour circuler dans un circuit comprenant un moteur à combustion (1), un autre objet (6) et un radiateur (11), dans lequel le dispositif de thermostat (8) comprend une entrée (7') configurée pour recevoir un réfrigérant dans une position en amont du radiateur (11), une première sortie (9') configurée pour diriger le réfrigérant, via une ligne de dérivation (9), après le radiateur (11), une seconde sortie (10') configurée pour diriger le réfrigérant vers le radiateur (11), et un corps de vanne agencé de manière mobile (16, 20, 34, 44) configurée pour distribuer le réfrigérant de l'entrée (7') auxdites deux sorties (9', 10') en fonction de sa position et dans lequel le dispositif de thermostat (8) est configuré pour recevoir du réfrigérant, via un circuit pilote (14), à partir d'une position dans une conduite d'entrée de moteur (4) en aval du radiateur (11), **caractérisé en ce que** le dispositif de thermostat (8) comprend un premier élément de dilatation thermique (31) configuré pour être en contact thermique avec le réfrigérant entrant dans le dispositif de thermostat via le circuit pilote (14) et pour fournir une première course du corps de vanne (16, 20, 34, 44) en réponse à la température du réfrigérant dans le circuit pilote (14), et un second élément de dilatation thermique (32) configuré pour être en contact thermique avec le réfrigérant reçu via l'entrée (7') et pour fournir une seconde course du corps de vanne (16, 20, 34, 44) en réponse à la température du réfrigérant à partir de l'entrée (7') de telle sorte que le corps de vanne (16, 20, 34, 44) est déplacé vers une position définie par les courses des éléments de dilatation thermique (31, 32).

2. Dispositif de thermostat selon la revendication 1, **caractérisé en ce que** chacun des éléments de dilatation thermique (31, 32) comprend un organe détecteur (31a, 32a) configuré pour détecter la température du réfrigérant et un organe de course (31d, 32d, 33) configuré pour fournir ladite course du corps de vanne (16, 20, 34, 44) .

3. Dispositif de thermostat selon la revendication 2, **caractérisé en ce que** l'organe détecteur (31a) de l'un des éléments de dilatation thermique (31) est agencé de manière stationnaire dans le dispositif de thermostat (8) et l'organe de course (31d) dudit élément de dilatation (31) est relié à l'autre élément de dilatation thermique (32).

4. Dispositif de thermostat selon la revendication 3, **caractérisé en ce que** l'organe de course (31d) de l'élément de dilatation thermique (31) agencé de manière stationnaire est relié à l'organe de course (32d) de l'élément de dilatation thermique (32) agencé de manière mobile et l'organe détecteur de l'élément de dilatation thermique (32) agencé de manière mobile est relié au corps de vanne (16, 20, 34, 44).

5. Dispositif de thermostat selon la revendication 4, **caractérisé en ce que** les éléments de dilatation thermique (31, 32) sont munis d'un organe de course commun (31d, 32d, 33).

6. Dispositif de thermostat selon la revendication 3, **caractérisé en ce que** l'organe de course (31d) de l'élément de dilatation thermique (31) agencé de manière stationnaire est relié à l'organe détecteur (32a) de l'élément de dilatation thermique (32) agencé de manière mobile et l'organe de course (32d) de l'élément de dilatation thermique (32) agencé de manière mobile est relié au corps de vanne (16, 20, 34, 44).

7. Dispositif de thermostat selon l'une quelconque des revendications précédentes, **caractérisé en ce que** les éléments de dilatation thermique (31, 32) comprennent chacun un organe détecteur sous la forme d'une capsule (31a, 32a) enfermant un corps de matériau (31b, 32b) changeant de phase à une température spécifique (T₁, T₂) et un organe de course sous la forme d'un piston (31d, 32d, 33) configuré pour fournir ladite course du corps de vanne (16, 20, 34, 44) lorsque ledit corps de matériau (31b, 32b) change de phase.

8. Dispositif de thermostat selon l'une quelconque des revendications précédentes, **caractérisé en ce que** le dispositif de thermostat comprend un logement de thermostat (15) renfermant les éléments de dilatation thermique (31, 32) et le corps de vanne (16, 20, 34, 44).

9. Dispositif de thermostat selon l'une quelconque des revendications précédentes, **caractérisé en ce que** le corps de vanne (16, 20, 34, 44) est agencé de manière mobile entre une première position d'extrémité dans laquelle il dirige la totalité de l'écoulement de réfrigérant vers la conduite de dérivation de radiateur (9), une seconde position d'extrémité dans laquelle il dirige la totalité de l'écoulement de réfrigérant vers le radiateur (11) et au moins une position intermédiaire dans laquelle il dirige une partie de l'écoulement de réfrigérant vers la conduite de dérivation de radiateur (9) et une partie restante de l'écoulement de réfrigérant vers le radiateur (11).

10. Dispositif de thermostat selon la revendication 9, **caractérisé en ce que** le dispositif de thermostat (8) comprend un ressort de vanne (18, 35, 42) configuré pour déplacer le corps de vanne (16, 20, 34, 44) vers la première position d'extrémité.

11. Dispositif de thermostat selon l'une quelconque des revendications précédentes, **caractérisé en ce que** le dispositif de thermostat comprend une unité de vanne mobile (24) incluant deux corps de vanne sous la forme d'un premier clapet de vanne (16) configuré pour réguler l'écoulement de réfrigérant vers le radiateur (11) et un second clapet de vanne (20) configuré pour réguler l'écoulement de réfrigérant vers la conduite de dérivation de radiateur (9).

12. Dispositif thermostatique selon l'une quelconque des revendications précédentes, **caractérisé en ce que** le dispositif de thermostat comprend un corps de vanne mobile sous la forme d'un manchon tubulaire (34, 44) ayant une paroi périphérique (34a, 44a) configurée pour exposer ou recouvrir les deux sorties (9', 10') en vue de sa position.

13. Système de refroidissement comprenant un dispositif de thermostat selon l'une quelconque des revendications précédentes,

14. Système de refroidissement selon la revendication 13, **caractérisé en ce qu'**il comprend un autre objet sous la forme d'un objet activé temporairement.

15. Système de refroidissement selon la revendication 14, **caractérisé en ce qu'**un autre objet est un ralentisseur hydraulique (6) ou un dispositif de refroidissement de ralentisseur pour un ralentisseur hydraulique.
